# FASCICULE DE BREVET EUROPEEN

(11) **EP 3 030 775 B1**
(45) Date de publication et mention de la délivrance du brevet: **01.11.2017**
(21) Numéro de dépôt: 14790172.2
(22) Date de dépôt: 04.08.2014
(51) Int. Cl.: F02K 9/46

(54) **DISPOSITIF D'ALIMENTATION EN ERGOL DE MOTEUR-FUSEE**
VORRICHTUNG ZUM ZUFÜHREN EINES RAKETENMOTORTREIBSTOFFES
DEVICE FOR SUPPLYING ROCKET ENGINE PROPELLANT

(30) Priorité: 06.08.2013 FR 1357810
(43) Date de publication de la demande: 15.06.2016
(73) Titulaire: ArianeGroup SAS, 75015 Paris (FR); Centre National d'Etudes Spatiales (CNES), 75001 Paris (FR)
(72) Inventeur: DANGUY, François, F-27510 Tourny (FR); LEMAITRE, Alban, F-91200 Athis-mons (FR); FABBRI, Laurent, F-27620 Gasny (FR); PENDARIES, Vincent, F-27630 Heubecourt-Haricourt (FR)
(74) Mandataire: Intès, Didier Gérard André
(86) Numéro de dépôt international: PCT/FR2014/052025
(87) Numéro de publication internationale: WO 2015/019011

(56) Documents cités:
- FR-A1- 2 801 936
- JP-B- S4 910 764

## Description

### DOMAINE DE L'INVENTION

La présente invention concerne un dispositif d'alimentation en ergol de moteur-fusée ainsi qu'un moteur-fusée équipé d'un tel dispositif d'alimentation en ergol.

### ETAT DE LA TECHNIQUE ANTERIEURE

On connaît un dispositif d'alimentation en ergol de moteur-fusée comprenant au moins un réservoir d'ergol, une chambre de combustion, une conduite d'alimentation s'étendant du réservoir à la chambre de combustion pour alimenter en ergol la chambre de combustion et sur laquelle sont successivement disposées une vanne et une pompe principale.

Dans ce dispositif d'alimentation connu, il n'est pas aisé de prélever efficacement de l'ergol pour des fins autres que l'alimentation principale de la chambre de combustion et ce sans pénaliser significativement les performances du moteur-fusée. Il existe donc un besoin en ce sens.

En outre, le document FR 2 801 936 divulgue un moteur-fusée muni d'un générateur de gaz, une conduite d'évacuation des gaz d'échappement du générateur de gaz débouchant en amont des turbopompes dans la veine principale d'au moins l'un des combustibles.

### PRESENTATION DE L'INVENTION

Dans un mode de réalisation, le dispositif de moteur-fusée selon l'invention et conformément à la revendication 1 comprend au moins un réservoir d'ergol, une chambre de combustion, une conduite d'alimentation s'étendant du réservoir à la chambre de combustion pour alimenter en ergol la chambre de combustion et sur laquelle sont successivement disposées une vanne et une pompe principale, et au moins une pompe de dérivation reliée en dérivation au réservoir en amont de la vanne, pour alimenter une conduite auxiliaire servant à une fonction auxiliaire du moteur-fusée.

Les termes « amont » et « aval » sont définis par rapport au sens de circulation normal d'un ergol dans un circuit d'alimentation, notamment dans le sens allant du réservoir vers la chambre de combustion.

On comprend que la pompe de dérivation est raccordée fluidiquement au réservoir en amont de la vanne, et ce directement au réservoir, ou par l'intermédiaire de la portion de conduite d'alimentation s'étendant entre le réservoir et la vanne.

On comprend également que le dispositif d'alimentation comporte un ou plusieurs réservoir(s) d'ergol(s), chaque réservoir étant relié à la chambre de combustion par une conduite d'alimentation distincte de celle de l'autre ou des autres réservoirs, chacune de ces conduites étant équipée d'une vanne disposée en amont d'une pompe principale. Au sens de l'invention, il est prévu au moins une pompe de dérivation disposée en amont d'une vanne d'une conduite d'alimentation. Par exemple, il y a deux pompes de dérivation disposées en amont d'une première vanne, une unique pompe de dérivation disposée en amont d'une seconde vanne, et aucune pompe de dérivation en amont d'une troisième vanne. Selon un autre exemple, il y a une unique pompe de dérivation disposée en amont de chacune des vannes. Selon encore un autre exemple, il y a une seule pompe de dérivation disposée en amont d'une seule des vannes.

La vanne permet d'interrompre ou d'autoriser l'alimentation en ergol de la chambre de combustion. La pompe de dérivation étant reliée au réservoir en amont de la vanne, on comprend que l'ergol du réservoir est susceptible d'être prélevé par la pompe de dérivation avant de passer par la vanne. Ainsi, grâce à cette disposition avantageuse de la pompe de dérivation au sein du dispositif d'alimentation, on peut prélever de l'ergol pour alimenter la conduite auxiliaire quel que soit l'état d'ouverture ou de fermeture de la vanne. De plus, ceci offre la possibilité à la pompe de dérivation de pouvoir fonctionner en très fort sous-débit en minimisant les risques d'instabilité de fonctionnement et offre une capacité d'aspiration optimale sur une large plage de fonctionnement.

Par ailleurs, la pompe de dérivation étant constamment en contact avec l'ergol du réservoir ou de l'ergol à proximité du réservoir contenu dans la portion de conduite d'alimentation s'étendant entre le réservoir et la vanne, la pompe de dérivation est à une température sensiblement égale à la température dudit ergol, ce qui est une condition préalable à tout pompage d'ergol. Par « température sensiblement égale », on entend que les températures diffèrent de quelques Kelvin, par exemple, selon le type d'ergol, au maximum de 10 Kelvin. Ceci permet de minimiser le délai de démarrage de cette pompe de dérivation et de la rendre disponible en permanence.

En outre, grâce au positionnement de la pompe de dérivation, la structure du dispositif d'alimentation est relativement simple et son encombrement réduit.

Dans certains modes de réalisation, la pompe de dérivation est une pompe électrique dont un moteur comprend un rotor et un stator, le rotor étant disposé dans une chambre de rotor dont le stator est hermétiquement isolé.

Au sens de l'invention, la pompe de dérivation comprend une partie moteur, ou moteur, et une partie de pompage. La partie de pompage comprend par exemple une volute et une roue à aubes. La partie moteur comprend tout ce qui ne fait pas partie de la partie de pompage. De l'ergol (ou un autre fluide) peut circuler le long du rotor, dans la chambre de rotor. En revanche, grâce à l'isolation hermétique l'ergol ne peut pas atteindre le stator. Le stator, comprenant notamment une partie bobinée, étant isolé de l'ergol, la pompe de dérivation ne requiert aucune autre étanchéité particulière en dehors de joints classiques de carter, ce qui simplifie sa conception et améliore sa fiabilité. De plus, grâce à cette structure de pompe, la pompe de dérivation peut être utilisée aussi bien en milieu réducteur qu'en milieu oxydant. En effet, il n'y a aucun contact physique entre l'ergol et l'alimentation électrique de la pompe, ce qui permet notamment d'utiliser la pompe en milieu oxydant.

Dans certains modes de réalisation, le moteur est du type à aimants permanents. Par exemple, une pluralité d'aimants permanents est fixée sur le rotor. Ces aimants sont maintenus sur le rotor par une frette ou une couche d'isolation, ou encore par des moyens connus par ailleurs. La frette peut être métallique et soudée sur le rotor, ce qui isole les aimants de l'ergol. Selon une variante, si les aimants sont compatibles avec l'ergol, ils peuvent être fixés par d'autres moyens, par exemple au moyen d'une frette non soudée sur le rotor.

Dans certains modes de réalisation, une alimentation électrique d'un stator de la pompe de dérivation est directement accessible depuis l'extérieur du réservoir et de la conduite d'alimentation.

On comprend donc que toute la connectique d'alimentation électrique de la pompe de dérivation n'est pas en contact avec l'ergol. Ceci permet d'éviter toute mesure contraignante pour assurer l'étanchéité de l'alimentation électrique, et notamment des connecteurs électrique. Ceci permet l'emploi de composants classiques, ce qui simplifie la conception et la réalisation de la pompe, notamment de sa partie électrique, optimise son encombrement et sa masse tout en diminuant les coûts.

Dans certains modes de réalisation, le rotor est soutenu par au moins un palier refroidi par un circuit de refroidissement utilisant l'ergol comme fluide de refroidissement.

Par exemple, le palier est du type palier fluide et/ou comprend un roulement à billes et/ou un roulement à rouleaux. L'ergol circulant comme fluide de refroidissement peut ensuite être réinjecté dans la partie de pompage (par exemple la volute) de ladite pompe de dérivation, dans le réservoir ou dans la conduite d'alimentation. Un tel refroidissement d'un ou plusieurs paliers contribue à évacuer la puissance dissipée par les paliers et par le moteur et à maintenir la pompe de dérivation à la même température que celle de l'ergol.

Dans certains modes de réalisation, le rotor est soutenu par deux paliers. Par exemple, chacun des deux paliers est refroidi par un circuit de refroidissement utilisant l'ergol comme fluide de refroidissement. Selon un autre exemple, les deux paliers sont refroidis par un même circuit de refroidissement utilisant l'ergol comme fluide de refroidissement.

Dans certains modes de réalisation, une entrée du circuit de refroidissement au sein de la pompe de dérivation est prévue du côté d'un des deux paliers, et une sortie du circuit de refroidissement est prévue du côté de l'autre palier parmi les deux paliers. Par exemple, de l'entrée vers la sortie, le fluide de refroidissement circule le long du rotor.

Dans certains modes de réalisation, la pompe de dérivation présente un carter moteur, ledit carter moteur ayant une surface de refroidissement le long de laquelle l'ergol peut circuler en tant que fluide de refroidissement.

On entend par « carter moteur » une structure fixe servant de support et de protection extérieure aux éléments fixes et mobiles de la pompe de dérivation, en particulier de son moteur.

On comprend que de l'ergol circule le long de la surface de refroidissement, en étant au contact de ladite surface, et refroidit cette surface par convection. Un tel refroidissement du carter moteur contribue à maintenir la pompe de dérivation à la même température que celle de l'ergol. Bien entendu, le circuit de refroidissement du carter moteur peut être reliée fluidiquement au circuit de refroidissement du ou des paliers.

Par exemple, le carter moteur présente une paroi double délimitant un espace à l'intérieur duquel l'ergol peut circuler en tant que fluide de refroidissement.

Dans certains modes de réalisation, la pompe de dérivation est fixée sur une paroi d'un élément parmi le réservoir et la conduite d'alimentation.

La pompe de dérivation est ainsi en contact direct avec l'ergol contenu dans le réservoir, ou à proximité du réservoir dans la portion de la conduite d'alimentation comprise entre le réservoir et la vanne, ce qui assure son maintien en froid (c'est-à-dire sensiblement à la même température que l'ergol) avec une grande fiabilité et un impact négligeable sur la température de l'ergol dans le réservoir ou dans la conduite d'alimentation compte tenu de la quantité d'ergol en présence. De plus, une telle fixation permet d'optimiser l'encombrement de la pompe au sein du dispositif d'alimentation.

Dans le cas où le dispositif de moteur-fusée comprend plusieurs réservoirs et plusieurs pompes de dérivation, il n'est pas nécessaire que toutes les pompes de dérivation soient reliées aux réservoirs/conduites de la même manière. Par exemple, si un dispositif de moteur-fusée comprend un réservoir contenant un ergol oxydant et un réservoir contenant un ergol réducteur, chaque réservoir étant pourvu d'une conduite d'alimentation de la chambre de combustion, une pompe de dérivation peut être fixée sur une paroi de chaque réservoir, ou sur une paroi de chaque conduite d'alimentation, ou encore une pompe de dérivation peut être fixée sur une paroi du réservoir d'ergol oxydant et une autre pompe de dérivation peut être fixée sur une paroi de la conduite d'alimentation en ergol réducteur, ou inversement.

Quand la pompe de dérivation est fixée sur une paroi du réservoir d'ergol, elle est avantageusement fixée sur une paroi de fond dudit réservoir d'ergol. Le terme de fond est défini par rapport à la direction et au sens de l'accélération à laquelle est soumis le dispositif d'alimentation en ergol de moteur-fusée lorsque le moteur-fusée est en fonctionnement. Une paroi de fond est donc une paroi disposée à l'opposé du sens de l'accélération générée par le moteur-fusée. La pompe de dérivation étant au fond du réservoir, l'ergol est toujours disponible de manière satisfaisante pour alimenter la pompe de dérivation.

Dans certains modes de réalisation, la pompe de dérivation comprend une volute d'amenée de fluide et un carter moteur, ladite volute étant fixée au carter moteur, tandis que le carter moteur est fixé sur ladite paroi.

Une volute d'amenée de fluide, ou plus généralement volute, est une pièce éventuellement en plusieurs parties, dont la forme est conçue pour conduire l'ergol depuis l'entrée du circuit de pompage vers la sortie du circuit de pompage de la pompe de dérivation. Une roue à aubes, assurant le pompage du fluide, est logée dans la volute.

Selon une première variante, le carter moteur est au moins en partie à l'intérieur de l'élément parmi le réservoir et la conduite d'alimentation sur la paroi duquel la pompe de dérivation est fixée, tandis que la volute est à l'extérieur dudit élément.

L'encombrement de la pompe de dérivation est ainsi limité et il est possible d'effectuer l'incorporation de la pompe au sein du dispositif d'alimentation depuis l'extérieur du réservoir/conduite. Un tel montage présente un équilibre intéressant entre l'encombrement de la pompe au sein du dispositif d'alimentation et la facilité d'accès à la pompe. En outre, ce montage permet de minimiser les contraintes mécaniques de la partie de fixation, en générale une bride, de la pompe sur le réservoir ou la conduite.

Selon une deuxième variante, le carter moteur et la volute sont à l'extérieur de l'élément parmi le réservoir et la conduite d'alimentation sur la paroi duquel la pompe de dérivation est fixée.

L'incorporation de la pompe de dérivation au sein du dispositif d'alimentation est particulièrement aisée et les performances de la pompe de dérivation sont optimales.

Selon une troisième variante, le carter moteur et la volute sont à l'intérieur de l'élément parmi le réservoir et la conduite d'alimentation sur la paroi duquel la pompe de dérivation est fixée.

L'encombrement de la pompe est réduit au maximum. Par ailleurs la paroi extérieure du carter moteur et de la volute est directement en contact avec l'ergol, ce qui optimise la mise en froid de la pompe de dérivation, et donc sa disponibilité.

L'invention concerne également un moteur fusée comprenant un dispositif d'alimentation en ergol pour moteur-fusée selon l'invention.

### BREVE DESCRIPTION DES DESSINS

L'invention sera bien comprise et ses avantages apparaîtront mieux à la lecture de la description détaillée qui suit, de modes de réalisation représentés à titre d'exemples non limitatifs. La description se réfère aux pages de figures annexées, sur lesquels :
- les figures 1A et 1B sont des vues schématiques d'un moteur-fusée selon l'invention;
- la figure 2 est une vue en coupe longitudinale de la pompe de dérivation de la figure 1A ou 1B ;
- la figure 3 est une vue en coupe longitudinale d'un deuxième mode de réalisation de la pompe de dérivation ; et
- la figure 4 est une vue en coupe longitudinale d'une troisième mode de réalisation de la pompe de dérivation.

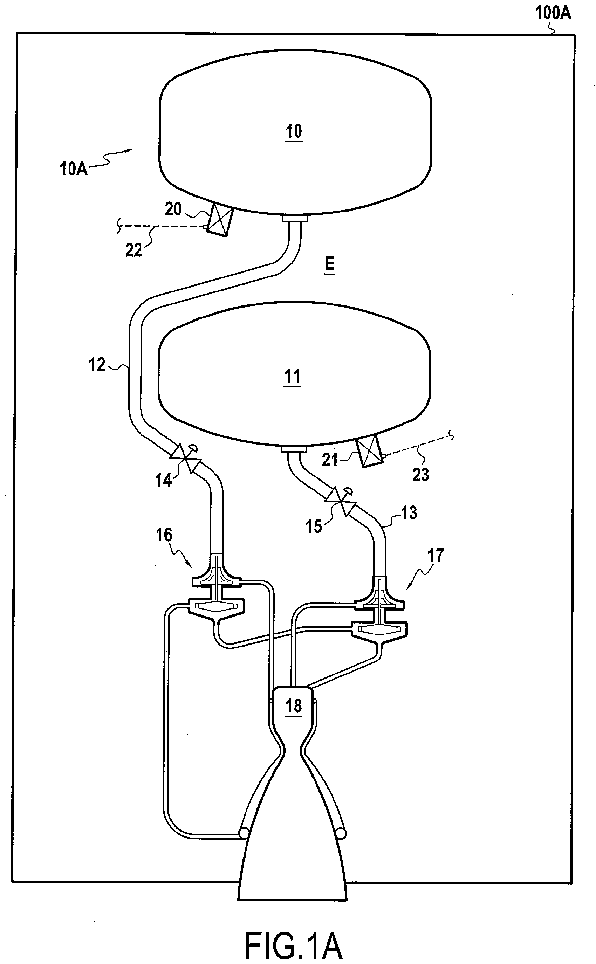

La figure 1A est une vue schématique d'un moteur-fusée 100A équipé d'un dispositif d'alimentation d'ergol 10A. Ce dispositif d'alimentation d'ergol 10A comprend un premier réservoir 10, contenant par exemple un ergol réducteur, par exemple de l'hydrogène liquide, et un deuxième réservoir 11, contenant par exemple un ergol oxydant, par exemple de l'oxygène liquide. Le premier réservoir 10 alimente en ergol une chambre de combustion 18 par l'intermédiaire d'une première conduite d'alimentation 12, sur laquelle sont successivement disposées, de l'amont vers l'aval, une première vanne 14 et une première pompe principale 16. Le deuxième réservoir 11 alimente en ergol la chambre de combustion 18 par l'intermédiaire d'une deuxième conduite d'alimentation 13, sur laquelle sont successivement disposées, de l'amont vers l'aval, une deuxième vanne 15 et une deuxième pompe principale 17. Dans cet exemple, les pompes principales 16, 17 sont des turbopompes. Avant d'être injecté dans la chambre de combustion 18, l'ergol pompé par la première pompe 16 passe dans un échangeur de chaleur avec la chambre de combustion 18, puis, une fois réchauffé, entraîne les turbines des turbopompes 16, 17 (moteur-fusée avec cycle à expandeur, en anglais « Expander »). Le dispositif de moteur-fusée pourrait appartenir à un moteur-fusée d'un autre type, par exemple à flux intégré (cycle à combustion étagée) ou à flux dérivé (cycle avec ou sans générateur de gaz).

Une première pompe de dérivation 20 est fixée sur une paroi de fond du premier réservoir 10 et alimente une première conduite auxiliaire 22. La première pompe de dérivation 20 est donc reliée au premier réservoir 10 en dérivation, c'est-à-dire que l'ergol passant par la première pompe de dérivation 20 est envoyé vers la première conduite auxiliaire 22 et non vers la première conduite d'alimentation 12. De même, une deuxième pompe de dérivation 21 est fixée sur une paroi de fond du deuxième réservoir 11 et alimente une deuxième conduite auxiliaire 23. La deuxième pompe de dérivation 21 est donc reliée au deuxième réservoir 11 en dérivation, c'est-à-dire que l'ergol passant par la deuxième pompe de dérivation 21 est envoyé vers la deuxième conduite auxiliaire 23 et non vers la deuxième conduite d'alimentation 13.

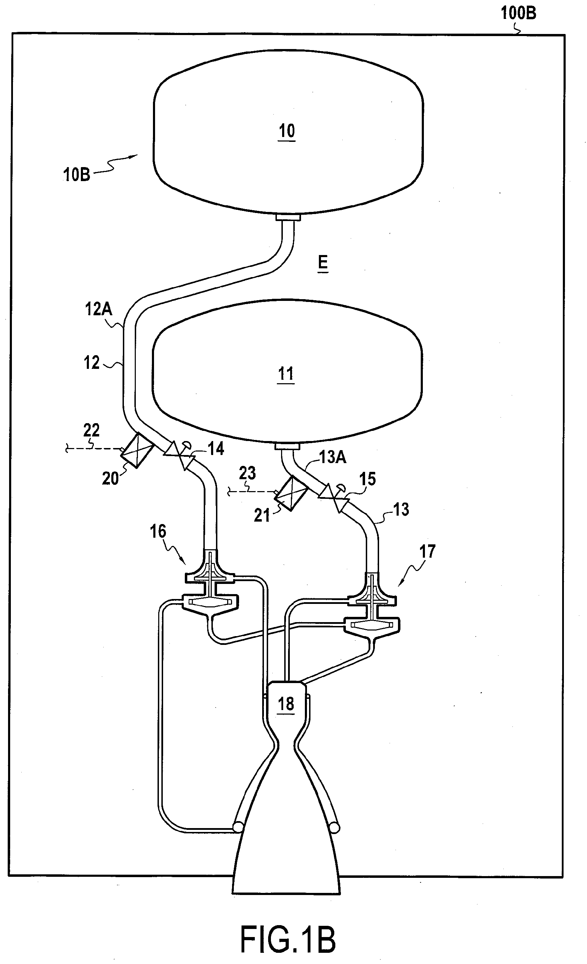

Comme on peut le voir sur la figure 1B, selon un autre exemple, au sein du dispositif d'alimentation en ergol 10B du moteur-fusée 100B, les pompes de dérivation 20, 21 ne sont pas fixées sur les parois de fond des réservoirs 10, 11 mais sont respectivement fixées sur une paroi de la première conduite d'alimentation 12, en amont de la première vanne 14, et sur une paroi de la deuxième conduite d'alimentation 13, en amont de la deuxième vanne 15. Ainsi, les pompes de dérivation 20, 21 sont respectivement reliées aux réservoirs 10, 11 en amont des vannes 14, 15 par l'intermédiaire des portions de conduite d'alimentation 12A, 13A s'étendant respectivement entre les réservoirs 10, 11 et les vannes 14, 15.

En outre, dans d'autres modes de réalisation non représentés, la première pompe de dérivation 20 pourrait être fixée au premier réservoir 10 tandis que la deuxième pompe de dérivation 21 serait fixée à la deuxième conduite d'alimentation 13, ou bien la première pompe de dérivation 20 pourrait être fixée à la première conduite d'alimentation 12 tandis que la deuxième pompe de dérivation 21 serait fixée au deuxième réservoir 11. Dans tous les cas, les pompes de dérivation 20, 21 sont reliées aux réservoirs 10, 11 respectifs en amont des vannes 14, 15 respectives. Bien entendu, le dispositif 10A ou 10B pourrait ne présenter qu'une seule pompe de dérivation, plus d'une pompe de dérivation sur un seul réservoir et/ou conduite, ou encore plus d'une pompe de dérivation sur chaque réservoir et/ou conduite.

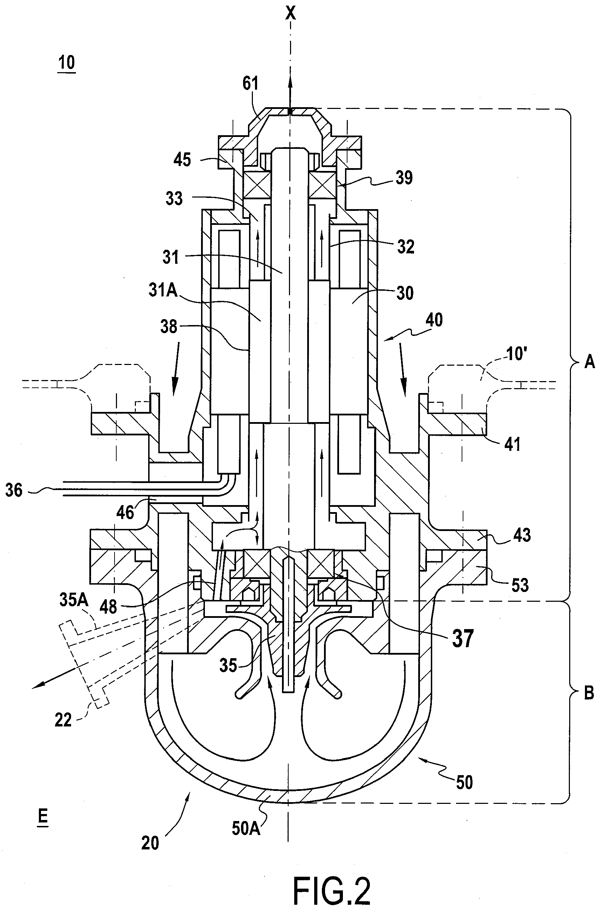

En référence aux figures 2 à 4, la structure de la pompe de dérivation va maintenant être détaillée. On prendra l'exemple de la première pompe de dérivation 20 fixée sur la paroi de fond du premier réservoir 10, mais la structure décrite ci-après demeure sensiblement inchangée pour la deuxième pompe de dérivation 21 et/ou si la pompe est fixée ailleurs que sur la paroi de fond du premier réservoir 10, comme par exemple sur la figure 1B. Les flèches des figures 2 à 4 représentent le sens de circulation de l'ergol dans la première pompe de dérivation.

Les termes haut et bas sont définis par rapport à l'axe X de la pompe de dérivation, formant l'axe de rotation du rotor, dans le sens représenté sur les figures, le haut de la pompe étant disposé dans le haut de la figure et le bas de la pompe étant disposé dans le bas de la figure.

La figure 2 présente une vue en coupe longitudinale de la première pompe de dérivation 20 fixée sur une paroi de fond 10' du premier réservoir 10. Ce mode de réalisation correspond à la première variante mentionnée ci-avant. La première pompe de dérivation 20 est une pompe électrique dont le moteur comprend un stator 30 et un rotor 31 (comprenant un arbre de rotor), logés dans un carter moteur 40. La pompe 20 comprend également une volute d'amenée de fluide 50. Le carter moteur 40 comprend une première partie de fixation 41 pour sa fixation sur la paroi 10' du premier réservoir, une deuxième partie de fixation 43 pour sa fixation avec une partie de fixation correspondante 53 de la volute. Ces fixations sont réalisées par des moyens connus par ailleurs. Ainsi, le carter moteur 40 est fixé sur la paroi 10' du réservoir, et la volute 50 est fixée sur le carter moteur 40.

Le carter moteur 40 est en partie à l'intérieur du premier réservoir 10, tandis que la volute 50 est à l'extérieur dudit réservoir. Ceci permet de prévoir, dans le carter moteur 40, un bras percé 46 pour le passage d'un câble électrique 36 d'alimentation du stator 30. Le câble 36 est donc facilement accessible depuis l'extérieur E du premier réservoir 10 et de la première pompe de dérivation 20.

Le rotor 31 est disposé dans une chambre de rotor 33 dont le stator est isolé par une paroi de séparation 32. Ainsi, le stator 30 est hermétiquement isolé de l'ergol circulant dans la pompe de dérivation au sein de la chambre de rotor 33, grâce à quoi le câble électrique 36 est également isolé de la chambre de rotor 33, et donc de l'ergol.

Le moteur de la pompe de dérivation 20 est de type à aimants permanents.

Une roue à aubes 35 assurant le pompage est couplée en rotation avec le rotor 31. Le rotor 31 est soutenu par un premier palier 37 et un second palier 39. De manière générale, la partie A forme la partie moteur, ou moteur, tandis que la partie B forme la partie de pompage de la pompe de dérivation 20.

Après le passage dans la roue à aubes 35, la plupart de l'ergol est envoyé vers la première conduite auxiliaire 22 au travers de la tubulure de refoulement 35A. Toutefois, un passage 48 permet de prélever en amont de la tubulure 35A une fraction de l'ergol pompé pour refroidir les paliers 37 et 39. Cette fraction d'ergol circule pour partie dans le premier palier 37, avant d'être réinjectée dans la volute. L'autre partie de l'ergol prélevé circule le long de la paroi de séparation 32 formant une surface de refroidissement, et circule notamment dans l'entrefer 38 s'étendant entre la paroi 32 au niveau du stator 30 et les aimants 31A du rotor 31, puis atteint le second palier 39. Cet ergol prélevé est ensuite réinjecté dans le premier réservoir 10 par une buse d'éjection 61.

Selon une variante, le passage 48 n'est pas prévu tandis que le premier palier 37, la paroi 32 et le second palier 39 sont refroidis en série par de l'ergol prélevé en amont de la tubulure 35A.

Dans le mode de réalisation de la figure 2, la volute d'amenée de fluide 50 présente un carter extérieur 50A en forme générale de pot. La partie de fixation 53 de la volute 50 sur le carter moteur 40 se trouve à la périphérie du pot 50A, en haut du pot.

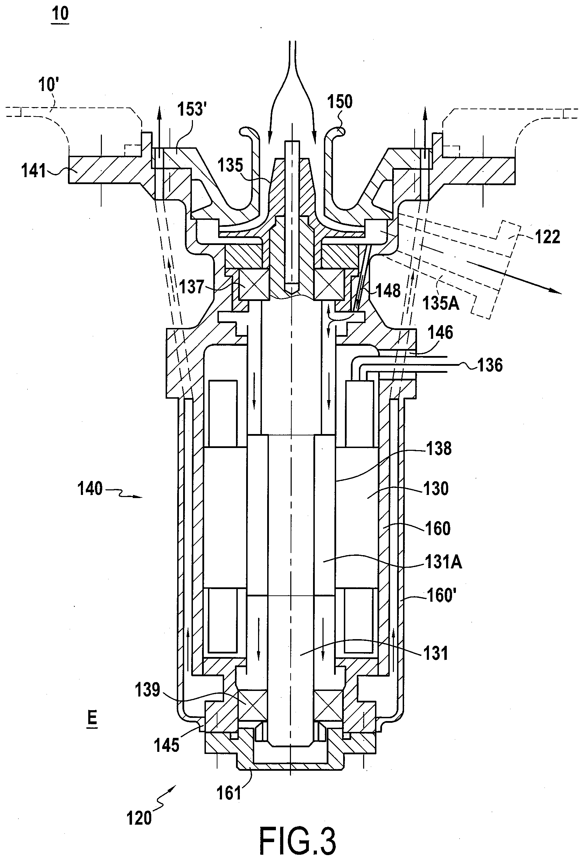

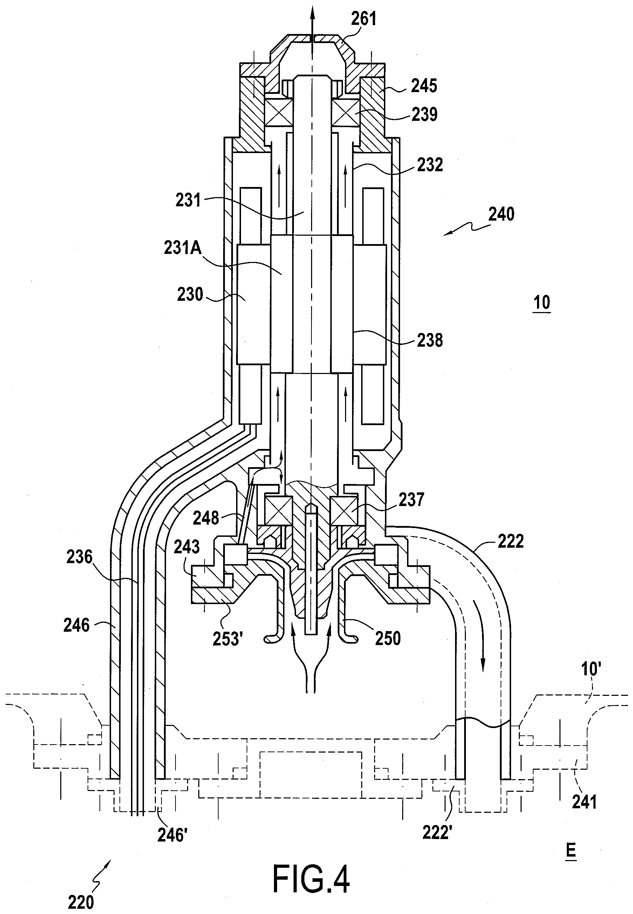

Les figures 3 et 4 présentent d'autres modes de réalisation de la pompe de dérivation correspondant respectivement à la deuxième et à la troisième variante mentionnées ci-avant. Dans ces figures, les éléments correspondant ou identiques à ceux du premier mode de réalisation recevront le même signe de référence, au chiffre des centaines près, et ne seront pas décrits à nouveau.

Dans le mode de réalisation de la figure 3, le carter moteur 140 et la volute d'amenée de fluide 150 de la première pompe de dérivation 120 sont placés à l'extérieur du premier réservoir 10, c'est-à-dire en saillie vers l'extérieur E par rapport à la paroi 10'. La volute d'amenée de fluide 150 ne comporte pas de carter extérieur formant un pot dans la mesure où elle est disposée directement à l'intérieur du premier réservoir 10.

Au lieu de la buse d'éjection 61 de la pompe de dérivation 20, la pompe de dérivation 120 comprend une coupelle 161 ne comportant aucun perçage pour laisser passer l'ergol. La coupelle 161 est fixée au carter moteur 140 au niveau d'une partie de fixation 145 du carter moteur.

Ainsi, dans ce mode de réalisation, l'ergol est aspiré par le haut directement dans le premier réservoir 10. La fraction d'ergol servant au refroidissement est prélevée via le passage 148 en amont de la tubulure 135A, puis circule comme décrit précédemment via le premier palier 137 et le second palier 139. Ensuite, la fraction d'ergol ayant servi au refroidissement de la paroi 132 et du second palier 139 est dirigée dans un espace intérieur ménagé en périphérie externe du carter moteur 140 entre deux parois 160, 160'. Les parois 132, 160 et 160' forment des surfaces de refroidissement le long desquelles l'ergol peut circuler avant d'être réinjecté dans le premier réservoir 10, autour de la volute 150. L'aspiration d'ergol et le rejet d'ergol de refroidissement ont donc lieu du même côté de la pompe de dérivation 120, et notamment du côté du premier palier 137. Bien entendu, comme précédemment, selon une variante, le passage 148 n'est pas prévu tandis que le premier palier 137, la paroi 132 et le second palier 139 sont refroidis en série par de l'ergol prélevé au sein de la volute.

Dans ce mode de réalisation, le positionnement du carter moteur 140 à l'extérieur du premier réservoir 10 permet toujours un accès particulièrement facile au câble 136 d'alimentation électrique du stator 130, par un bras percé 146 débouchant sur l'extérieur E du réservoir 10 et de la conduite auxiliaire 122.

La figure 4 présente un troisième mode de réalisation de pompe de dérivation 220, dans lequel le carter moteur 240 et la volute d'amenée de fluide 250 sont disposés à l'intérieur du premier réservoir 10. La volute 250 fait face à la paroi 10' de fond du premier réservoir. La fixation du carter moteur 240 à la paroi 10' dudit réservoir 10 est assurée par l'intermédiaire de la conduite auxiliaire 222, via une fixation 222', et par un bras percé 246 du carter moteur 240, via une fixation 246'. Le bras 246 est un bras creux permettant d'assurer une connexion électrique depuis l'extérieur E avec le stator 230. La fixation de la conduite auxiliaire 222' et la fixation du bras 246' peuvent être tout type de fixations connu par ailleurs.

Comme la première pompe de dérivation 120 selon le deuxième mode de réalisation, la première pompe de dérivation 220 selon le troisième mode de réalisation est agencée de telle sorte que la volute 250 est disposée directement à l'intérieur du premier réservoir 10.

Dans le mode de réalisation représenté sur la figure 4, l'ergol est aspiré par le bas. La majeure partie de l'ergol est envoyée dans la conduite auxiliaire 222, tandis qu'une fraction est prélevée pour le refroidissement des paliers 237, 239. Cette fraction d'ergol est prélevée via le passage 248 et circule d'une part dans le premier palier 237 et d'autre part dans le second palier 239 comme décrit précédemment. De même, selon une variante, le passage 248 n'est pas prévu tandis que le premier palier 237, la paroi 232 et le second palier 239 sont refroidis en série par de l'ergol prélevé au sein de la volute.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Dispositif d'alimentation en ergol (10A, 10B) de moteur-fusée comprenant au moins un réservoir d'ergol (10, 11), une chambre de combustion (18), une conduite d'alimentation (12, 13) s'étendant du réservoir (10, 11) à la chambre de combustion (18) pour alimenter en ergol la chambre de combustion et sur laquelle sont successivement disposées une vanne (14, 15) et une pompe principale (16, 17), le dispositif étant **caractérisé en ce qu'**il comprend en outre au moins une pompe de dérivation (20, 21, 120, 220) reliée en dérivation au réservoir en amont de la vanne, pour alimenter une conduite auxiliaire (22, 23, 122, 222) servant à une fonction auxiliaire du moteur-fusée.

2. Dispositif selon la revendication 1, dans lequel la pompe de dérivation (20, 21, 120, 220) est une pompe électrique dont un moteur comprend un rotor (31, 131, 231) et un stator (30, 130, 230), le rotor étant disposé dans une chambre de rotor (33, 133, 233) dont le stator est hermétiquement isolé.

3. Dispositif selon la revendication 1 ou 2, dans lequel une alimentation électrique (36, 136, 236) d'un stator de la pompe de dérivation est directement accessible depuis l'extérieur du réservoir et de la conduite d'alimentation.

4. Dispositif selon l'une quelconque des revendications précédentes, dans lequel le rotor (31, 131, 231) est soutenu par au moins un palier (37, 39 ; 137, 139 ; 237, 239) refroidi par un circuit de refroidissement utilisant l'ergol comme fluide de refroidissement.

5. Dispositif selon l'une quelconque des revendications précédentes, dans lequel la pompe de dérivation présente un carter moteur (40, 140, 240), ledit carter moteur ayant une surface (32, 132, 160, 160', 232) le long de laquelle l'ergol peut circuler en tant que fluide de refroidissement.

6. Dispositif selon l'une quelconque des revendications précédentes, dans lequel la pompe de dérivation est fixée sur une paroi d'un élément parmi le réservoir (10, 11) et la conduite d'alimentation (12, 13).

7. Dispositif selon la revendication 6, dans lequel la pompe de dérivation comprend une volute d'amenée de fluide (50, 150, 250) et un carter moteur (40, 140, 240), ladite volute étant fixée au carter moteur, tandis que le carter moteur est fixé sur ladite paroi (10').

8. Dispositif selon la revendication 7, dans lequel le carter moteur (40) est au moins en partie à l'intérieur de l'élément parmi le réservoir (10, 11) et la conduite d'alimentation (12, 13) sur la paroi duquel la pompe de dérivation est fixée, tandis que la volute (50) est à l'extérieur dudit élément.

9. Dispositif selon la revendication 7, dans lequel le carter moteur (140) et la volute (150) sont à l'extérieur de l'élément parmi le réservoir (10, 11) et la conduite d'alimentation (12, 13) sur la paroi duquel la pompe de dérivation est fixée.

10. Dispositif selon la revendication 7, dans lequel le carter moteur (240) et la volute (250) sont à l'intérieur de l'élément parmi le réservoir (10, 11) et la conduite d'alimentation (12, 13) sur la paroi duquel la pompe de dérivation est fixée.

11. Moteur-fusée (100A, 100B) comprenant un dispositif d'alimentation en ergol (10A, 10B) selon l'une quelconque des revendications précédentes.

## Patentansprüche

1. Vorrichtung zum Zuführen eines Raketenmotortreibstoffes (10A, 10B), umfassend mindestens einen Treibstoffbehälter (10, 11), eine Brennkammer (18), eine Zuführleitung (12, 13), die sich vom Behälter (10, 11) zur Brennkammer (18) erstreckt, um die Brennkammer mit Treibstoff zu versorgen, und auf der hintereinander ein Ventil (14, 15) und eine Hauptpumpe (16, 17) angeordnet sind, wobei die Vorrichtung **dadurch gekennzeichnet ist, dass** sie ferner mindestens eine Abzweigungspumpe (20, 21, 120, 220) umfasst, die in Abzweigung mit dem Behälter stromaufwärts zum Ventil verbunden ist, um eine Nebenleitung (22, 23, 122, 222) zu versorgen, die für eine Hilfsfunktion des Raketenmotors dient.

2. Vorrichtung gemäß Anspruch 1, bei der die Abzweigungspumpe (20, 21, 120, 220) eine Elektropumpe ist, deren Motor einen Rotor (31, 131, 231) und einen Stator (30, 130, 230) umfasst, wobei der Rotor in einer Rotorkammer (33, 133, 233) angeordnet ist, deren Stator hermetisch dicht isoliert ist.

3. Vorrichtung gemäß Anspruch 1 oder 2, bei der eine elektrische Versorgung (36, 136, 236) eines Stators der Abzweigungspumpe direkt von außerhalb des Behälters und der Zuführleitung zugänglich ist.

4. Vorrichtung gemäß einem der vorhergehenden Ansprüche, bei der der Rotor (31, 131, 231) durch mindestens ein Lager (37, 39; 137, 139; 237, 239) unterstützt wird, das durch eine Kühlschaltung gekühlt wird, die den Treibstoff als Kühlfluid verwendet.

5. Vorrichtung gemäß einem der vorhergehenden Ansprüche, bei der die Abzweigungspumpe ein Motorgehäuse (40, 140, 240) aufweist, wobei das Motorgehäuse eine Fläche (32, 132, 160, 160', 232) hat, entlang derer der Treibstoff als Kühlfluid zirkulieren kann.

6. Vorrichtung gemäß einem der vorhergehenden Ansprüche, bei der die Abzweigungspumpe an einer Wand eines Elements unter dem Behälter (10, 11) und der Zuführleitung (12, 13) befestigt ist.

7. Vorrichtung gemäß Anspruch 6, bei der die Abzweigungspumpe ein Fluideinlaufgehäuse (50, 150, 250) und ein Motorgehäuse (40, 140, 240) umfasst, wobei das Einlaufgehäuse am Motorgehäuse befestigt ist, während das Motorgehäuse an der Wand (10') befestigt ist.

8. Vorrichtung gemäß Anspruch 7, bei der das Motorgehäuse (40) zumindest teilweise im Inneren des Elements unter dem Behälter (10, 11) und der Zuführleitung (12, 13) ist, an dessen Wand die Abzweigungsleitung befestigt ist, während das Einlaufgehäuse (50) außerhalb des Elements ist.

9. Vorrichtung gemäß Anspruch 7, bei der das Motorgehäuse (140) und das Einlaufgehäuse (150) außerhalb des Elements unter dem Behälter (10, 11) und der Zuführleitung (12, 13) sind, an dessen Wand die Abzweigungsleitung befestigt ist.

10. Vorrichtung gemäß Anspruch 7, bei der das Motorgehäuse (240) und das Einlaufgehäuse (250) im Inneren des Elements unter dem Behälter (10, 11) und der Zuführleitung (12, 13) sind, an dessen Wand die Abzweigungsleitung befestigt ist.

11. Raketenmotor (100A, 100B), umfassend eine Vorrichtung zum Zuführen von Treibstoff (10A, 10B) gemäß einem der vorhergehenden Ansprüche.

## Claims

1. A device (10A, 10B) for feeding a rocket engine with propellant, the device comprising at least one propellant tank (10, 11), a combustion chamber (18), and a feed pipe (12, 13) extending from the tank (10, 11) to the combustion chamber (18) to feed propellant to the combustion chamber and having a valve (14, 15) and a main pump (16, 17) arranged in succession along the feed pipe, the device being **characterized in that** it further comprises at least one branch pump (20, 21, 120, 220) connected by a branch to the tank upstream from the valve in order to feed an auxiliary pipe (22, 23, 122, 222) that serves an auxiliary function of the rocket engine.

2. A device according to claim 1, wherein the branch pump (20, 21, 120, 222) is an electric pump having a motor comprising a rotor (31, 131, 231) and a stator (30, 130, 230), the rotor being arranged in a rotor chamber (33, 133, 233) from which the stator is hermetically isolated.

3. A device according to claim 1 or claim 2, wherein an electrical power supply (36, 136, 236) for a stator of the branch pump is directly accessible from outside the tank and outside the feed pipe.

4. A device according to any preceding claim, wherein the rotor (31, 131, 231) is supported by at least one bearing (37, 39; 137, 139; 237, 239) that is cooled by a cooling circuit using the propellant as cooling fluid.

5. A device according to any preceding claim, wherein the branch pump has a motor casing (40, 140, 240), said motor casing having a surface (32, 132, 160, 160', 232) along which the propellant can flow as a cooling fluid.

6. A device according to any preceding claim, wherein the branch pump is fastened to a wall of one element selected from the tank (10, 11) and the feed pipe (12, 13).

7. A device according to claim 6, wherein the branch pump includes a fluid delivery volute (50, 150, 250) and a motor casing (40, 140, 240), said volute being fastened to the motor casing and the motor casing being fastened to said wall (10').

8. A device according to claim 7, wherein the motor casing (40) is located at least in part inside the element selected from the tank (10, 11) and the feed pipe (12, 13) having the branch pump fastened to its wall, while the volute (50) is outside said element.

9. A device according to claim 7, wherein the motor casing (140) and the volute (150) are outside the element selected from the tank (10, 11) and the feed pipe (12, 13) having the branch pump fastened to its wall.

10. A device according to claim 7, wherein the engine casing (240) and the volute (250) are inside the element selected from the tank (10, 11) and the feed pipe (12, 13) having the branch pump fastened on its wall.

11. A rocket engine (100A, 100B) including a propellant feed device (10A, 10B) according to any preceding claim.
